# EUROPEAN PATENT SPECIFICATION

(11) **EP 1 733 941 B1**
(45) Date of publication and mention of the grant of the patent: **25.02.2009**
(21) Application number: 06252914.4
(22) Date of filing: 06.06.2006
(51) Int. Cl.: B60T 8/32, B60T 7/12

(54) **Anti-lock brake system**
Antiblockier-Bremssystem
Système de freinage antiblocage

(30) Priority: 18.06.2005 KR 20050052688
(43) Date of publication of application: 20.12.2006
(73) Proprietor: Mando Corporation, Pyungtaek-City, Kyungki-Do (KR)
(72) Inventor: Yang, I-Jin, Kyonggi-Do (KR)
(74) Representative: Pratt, David Martin

(56) References cited:
- EP-A- 1 013 519
- EP-A- 1 424 253
- EP-A- 1 439 105
- DE-A1- 4 027 793
- US-A- 3 592 228
- US-A- 6 056 373
- PATENT ABSTRACTS OF JAPAN vol. 2000, no. 25, 12 April 2001 (2001-04-12) -& JP 2001 225731 A (NISSIN KOGYO CO LTD), 21 August 2001 (2001-08-21)

## Description

The present invention relates to an anti-lock brake system, and in particular to an anti-lock brake system which is integrally organised with a rolling-prevention solenoid valve having a relief function in a single modulator block in order to prevent a vehicle, which temporarily stops on a slope, from rolling rearwards upon restarting of the vehicle.

In a vehicle brake system, an anti-lock brake system serves to prevent a slippage of wheels on a road surface by periodically intermittingly supplying brake fluid to the wheels.

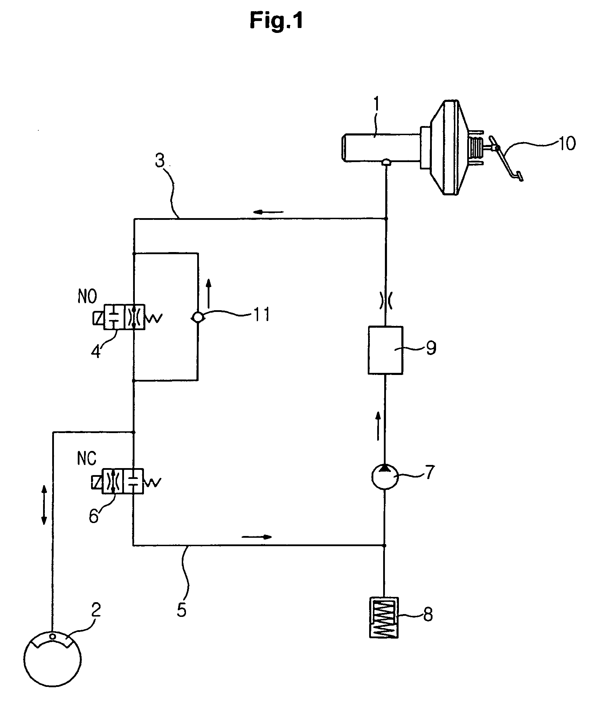

Referring to FIG. 1, a conventional anti-lock brake system includes a normally-open (NO) solenoid valve 4 installed in a supply path 3 that is connected between a master cylinder 1 and a wheel cylinder 2 on each wheel, and a normally-closed (NC) solenoid valve 6 installed in a return path 5 for brake fluid returned from each wheel.

The anti-lock brake system further includes a hydraulic pump 7 to pressurise the brake fluid that is being returned from each wheel, so as to generate a hydraulic brake pressure. Low-pressure and high-pressure accumulators 8 and 9 are located, respectively, upstream and downstream of the hydraulic pump 7.

Operation of this system is controlled by a not-shown electronic control unit (hereinafter, referred to as "ECU"). Specifically, the ECU controls the opening and closing of the NO and NC solenoid valves 4 and 6 for intermittently supplying brake fluid to each wheel, and also controls operation of the hydraulic pump 7 to pressurise the brake fluid, which is being returned via the return path 5, towards the wheel cylinder 2 on each wheel.

When a vehicle using this anti-lock brake system temporarily stops on a slope, as soon as a driver takes off his/her foot from a brake pedal 10, the brake fluid stored in the wheel cylinder 2 is discharged towards the master cylinder 1 by passing through a check valve 11 that is installed to bypass the NO solenoid valve 4. Thereby, a hydraulic brake pressure in the wheel cylinder 2 is eliminated. In this case, there is a time required to move the foot from the brake pedal 10 to an accelerator pedal (not shown); and, therefore, the vehicle may roll rearwards rather than advancing immediately. Such a rolling phenomenon has a risk of accidents, for example, collisions with following vehicles, etc.

Conventionally, to restrict such a rolling of a vehicle to the maximum extent, a driver must depend on skillful manipulations, for example by pressing an accelerator pedal rapidly or operating a hand brake, or by operating the accelerator pedal and brake pedal almost simultaneously.

As a solution to the above problem, Korean Patent Registration No. 10-0358894 discloses a technique using a control valve installed at a location of a brake hydraulic line to open and close the brake hydraulic line. When a vehicle is in a stationary state under operation of a brake, the control valve is switched on to close the hydraulic line. On the other hand, when a clutch transmits power to a transmission, the control valve is switched off to open the hydraulic line. With the opening and closing of the brake hydraulic line using the control valve, the disclosed technique prevents a vehicle, which temporarily stops on a slope, from rolling rearwards upon restarting of the vehicle.

In the above-described technique, brake fluid is stored in the wheel cylinder 2 if the brake pedal 10 is pressed, and moreover, an excessive hydraulic brake pressure is generated in the wheel cylinder 2 if the brake pedal 10 is pressed with an excessive force. The hydraulic brake pressure in the wheel cylinder 2 is continuously maintained until a driver presses an accelerator pedal to start a vehicle, and the brake fluid begins to be returned into the master cylinder 1 only after the accelerator pedal is pressed. Therefore, there is a time gap until the hydraulic brake pressure in the wheel cylinder 2 is completely eliminated after the accelerator pedal is pressed. Such a time gap makes it difficult to achieve rapid and smooth starting of a vehicle.

Furthermore, when the above-described technique is applied to a rolling-prevention device, the rolling-prevention device must be separately provided from an anti-lock brake system, and, therefore, there are several problems of excessive price burden, poor assembling efficiency, and difficulty of providing an installation space.

Known anti-lock brake systems are described in JP 2001225731 and US-A-3592228.

The aim of the present invention is to solve the above problems. It is an aspect of the invention to provide an anti-lock brake system which is integrally organised with a rolling-prevention solenoid valve in a single modulator block in order to prevent a vehicle, which temporarily stops on a slope, from rolling rearward upon restarting of the vehicle.

The present invention provides a anti-lock brake system comprising a master cylinder for generating a hydraulic brake pressure, a wheel cylinder provided at a vehicle wheel and adapted to generate a braking force based on the hydraulic brake pressure, a normally-open solenoid valve and a normally-closed solenoid valve provided, respectively, at locations near the entrance and the exit of the wheel cylinder and adapted to control flow of brake fluid, a hydraulic pump installed on a return path and adapted to suction and pressure the brake fluid returned from the wheel cylinder, and a low-pressure accumulator provided upstream of the hydraulic pump and adapted to accumulate the brake fluid, the system further comprising:
a wheel sensor for sensing a stationary state of the vehicle on a slope;
an NO rolling-prevention solenoid valve installed in a connection path that connects an exit of the master cylinder to an exit of the hydraulic pump, the NO rolling prevention solenoid valve having a valve seat provided with a main orifice to be closed during a rolling-prevention mode;
a relief path that connects the exit of the master cylinder to a location upstream of the NO solenoid valve; and
a relief valve installed in the relief path and adapted to reduce the hydraulic brake pressure in the wheel cylinder when the hydraulic brake pressure exceeds a predetermined pressure value in a closed state of the rolling-prevention solenoid valve;
characterised in that the NO rolling-prevention solenoid valve further has a permanently-open auxiliary orifice having a smaller diameter than that of the main orifice extending laterally from the main orifice through the valve seat.

The rolling-prevention solenoid valve may further have a lip gap to circulate the brake fluid from the master cylinder to a supply path during implementation of the rolling-prevention mode while preventing backflow of the brake fluid.

The anti-lock brake system may be mounted in a single modulator block.

Preferably, the NO rolling prevention solenoid valve includes an armature a magnet core, a plunger and a return spring, and
wherein the rolling-prevention solenoid valve further comprises: a plunger guide member installed between an outer peripheral surface of the plunger and an inner peripheral surface of the magnet core; and a relief spring configured to surround the outer peripheral surface of the plunger and inserted between the plunger and the plunger guide member,
whereby the rolling-prevention solenoid valve has an additional relief function to reduce the hydraulic brake pressure in the wheel cylinder when the hydraulic brake pressure exceeds a predetermined pressure when the main orifice of the rolling-prevention solenoid valve is closed.

The relief spring may have an elastic coefficient larger than that of the return spring

Additional aspects and/or advantages of the invention will be set forth in part in the description which follows and, in part, will be obvious from the description, or may be learned by practice of the invention.

These and/or other aspects and advantages of the exemplary embodiments of the invention will become apparent and more readily appreciated from the following description of the embodiments, taken in conjunction with the accompanying drawings, of which:
FIG. 1 is a hydraulic circuit diagram of a conventional anti-lock brake system;
FIG. 2 is a hydraulic circuit diagram illustrating an anti-lock brake system according to a first embodiment of the present invention;
FIG. 3 is a sectional view illustrating a rolling-prevention solenoid valve included in the anti-lock brake system of FIG. 2;
FIG. 4 is a hydraulic circuit diagram illustrating an anti-lock brake system according to a second embodiment of the present invention; and
FIG. 5 is a sectional view illustrating a rolling-prevention solenoid valve included in the anti-lock brake system of FIG. 4.

Reference will now be made in detail to exemplary embodiments of the present invention, examples of which are illustrated in the accompanying drawings, wherein like reference numerals refer to like elements throughout. The embodiments are described below to explain the present invention by referring to the figures.

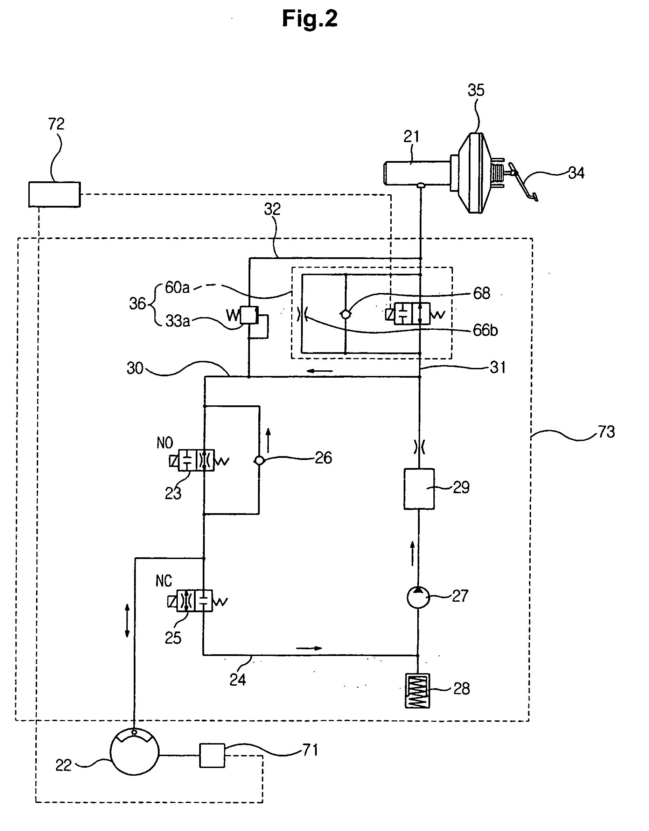

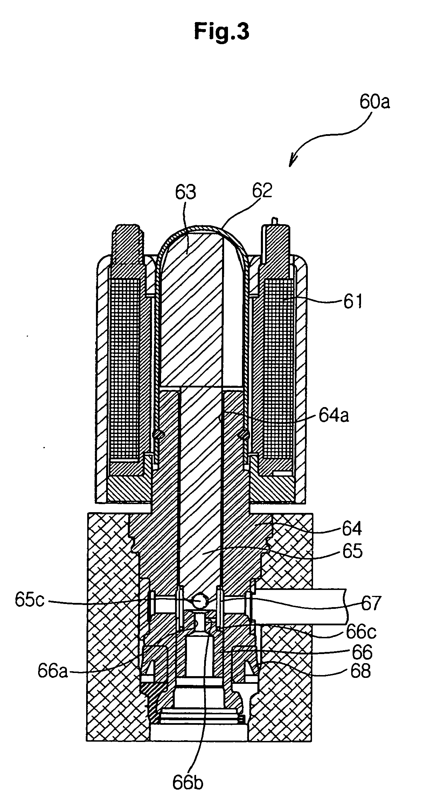

FIG. 2 is a hydraulic circuit diagram illustrating an anti-lock brake system according to a first embodiment of the present invention. FIG. 3 is a sectional view illustrating a rolling-prevention solenoid valve included in the anti-lock brake system of FIG. 2.

As shown in FIG. 2, the anti-lock brake system according to the first embodiment of the present invention includes an NO solenoid valve 23 installed to open and close a supply path 30 that is connected from a master cylinder 21 to a wheel cylinder 22 on each wheel, and an NC solenoid valve 25 installed to open and close a return path 24 that is connected from the wheel cylinder 22 to the master cylinder 21. The NO solenoid valve 23 is normally open, whereas the NC solenoid valve 25 is normally closed. A check valve 26 is installed to bypass the NO solenoid valve 23 and is adapted to allow brake fluid in the wheel cylinder 22 to be returned to the master cylinder 21 when a braking operation is completed and thus no hydraulic brake pressure is applied from the master cylinder 21.

The anti-lock brake system further includes a hydraulic pump 27 installed in the return path 24 and adapted to pressurise brake fluid which is being returned from the wheel cylinder 22 by passing through the NC solenoid valve 25, to an entrance of the NO solenoid valve 23. Low-pressure and high-pressure accumulators 28 and 29 defining damping spaces are installed in the return path 24 respectively upstream and downstream of the hydraulic pump 27. The low-pressure accumulator 28 functions temporarily to store the brake fluid which is being returned from the wheel cylinder 22 on each wheel, prior to supplying the brake fluid to the hydraulic pump 27. The high-pressure accumulator 29 functions temporarily to store the brake fluid pressurised in the hydraulic pump 27 so as to alleviate pressure pulsation of the brake fluid caused by operation of the hydraulic pump 27.

Operation of the above mentioned devices is controlled by an ECU (not shown). Specifically, the ECU controls the NO and NC solenoid valves 23 and 25 to open and close the supply path 30 and the return path 24, respectively, so as intermittently to supply the brake fluid to the wheel cylinder 22, and also controls operation of the hydraulic pump 27 so as to pressurise the brake fluid which is being returned via the return path 24 by passing through the low-pressure accumulator 28, towards each wheel.

In the present embodiment, the anti-lock brake system includes a rolling-prevention solenoid valve 60a installed in a connection path 31 that connects the master cylinder 21 to the supply path 30. Also, the anti-lock brake system includes a relief path 32 to connect a location near an exit of the master cylinder 21 to a location upstream of the NO solenoid valve 23, while being provided to bypass the connection path 31. A relief valve 33a is installed in the relief path 32. The rolling-prevention solenoid valve 60a has a normally-open main orifice 66a. When restarting a vehicle temporarily stopped on a slope, the main orifice 66a of the solenoid valve 60a is closed to prevent brake fluid in the wheel cylinder 22 from returning to the master cylinder 21 during a delay time required to press an accelerator pedal (not shown) after releasing the brake pedal 34. Thereby, the solenoid valve 60 has a function of preventing an unintentional rolling of a vehicle. When the hydraulic brake pressure in the wheel cylinder 22 exceeds a predetermined pressure suitable to prevent an unintentional rolling of a vehicle after the brake pedal 34 is released, the relief valve 33 is opened to depressurise brake fluid to the predetermined pressure. Thereby, the relief valve 33 allows the wheel cylinder 22 to keep only the minimum hydraulic brake pressure required for preventing an unintentional rolling of a vehicle, and consequently enables rapid and smooth starting of a vehicle when an accelerator pedal is pressed.

The rolling-prevention solenoid valve 60a is controlled in operation by a transmission control unit 72 (hereinafter, referred to as "TCU"). If a wheel sensor 71 provided at a vehicle wheel senses a stationary state of a vehicle while on a slope, and applies a signal to the TCU 72, a rolling-prevention mode begins such that the TCU 72 applies power to the rolling-prevention solenoid valve 60a to close the main orifice 66a of the rolling-prevention solenoid valve 60a. Then, when the brake pedal 34 is released and engine power is transmitted to a transmission, the rolling-prevention mode is cancelled. Thereby, the TCU 72 interrupts supply of power to the rolling-prevention solenoid valve 60a, so as to open the main orifice 66a of the rolling-prevention solenoid valve 60a.

The anti-lock brake system of the present invention includes the rolling-prevention solenoid valve 60a, the relief path 32, and the relief valve 33a which are integrally organised in a single modulator block 73.

In the anti-lock brake system of the present invention, furthermore, a function of the TCU 72 for controlling the rolling-prevention solenoid valve 66a upon receiving a signal from the wheel sensor 71 is included in the ECU, such that an ABS mode and rolling-prevention mode can be performed by use of a single control unit.

Referring to FIG. 3, the rolling-prevention solenoid valve 60a according to the first embodiment of the present invention includes a coil 61 to generate an electromagnetic field, and a cylindrical sleeve 62 mounted in the centre of the coil 61. An armature 63 is provided in the sleeve 62 and adapted to move vertically by the electromagnetic field generated by the coil 61. Also, a magnet core 64 having a hollow portion 64a is provided at one end of the armature 63 to be fixed at an outer peripheral surface thereof to an inner peripheral surface of the sleeve 62. In turn, a plunger 65 is inserted in the hollow portion 64a of the magnet core 64 in a vertically slidable manner. Also, a valve seat 66 is provided below the hollow portion 64a of the magnet core 64. The valve seat 66 has the main orifice 66a and an auxiliary orifice 66b having a smaller diameter than that of the main orifice 66a for inflow and outflow of brake fluid.

The valve seat 66 is formed at an outer surface thereof with a stepped portion 66c such that a return spring 67 is mounted between the stepped portion 66c and the plunger 65. The return spring 67 serves to return the plunger 65 and the armature 63 to their original state when no power is applied to the coil 61, so as to keep the main orifice 66a in an opened state. A lip gap 68 is defined by an elastic member at an outer lower end of the magnet core 64. The lip gap 68 functions as a check valve directly to pass brake fluid transmitted from the master cylinder 21 to the NO solenoid valve 23, rather than passing through the valve seat 66 while preventing backflow of the brake fluid. Specifically, since the main orifice 66a of the rolling-prevention solenoid valve 60a is closed during the rolling-prevention mode, when the brake pedal 34 is further pressed in a stationary state of a vehicle on a slope, the brake fluid in the master cylinder 21 is introduced into the wheel cylinder 22 through the lip gap 68. Thereby, even when the vehicle is in a stationary state on a slope, braking force is applied to a vehicle wheel, via the brake pedal 34, to prevent the brake fluid in the wheel cylinder 22 from returning to the master cylinder 21.

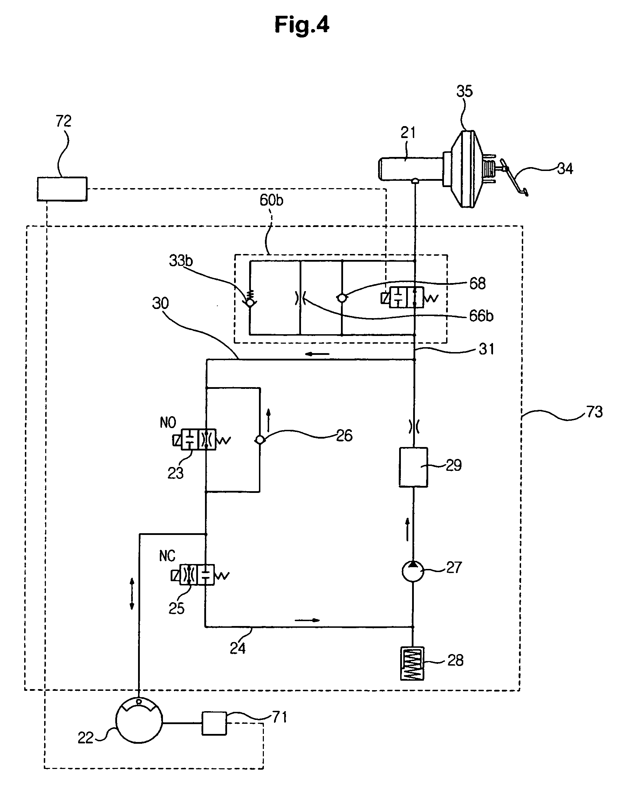

FIG. 4 is a hydraulic circuit diagram illustrating an anti-lock brake system according to a second embodiment of the present invention. The same reference numerals as those of FIG. 2 designate the same constituent elements.

In the anti-lock brake system according to the second embodiment, the rolling-prevention solenoid valve 60b is integrally formed with a relief structure to have an additional relief function.

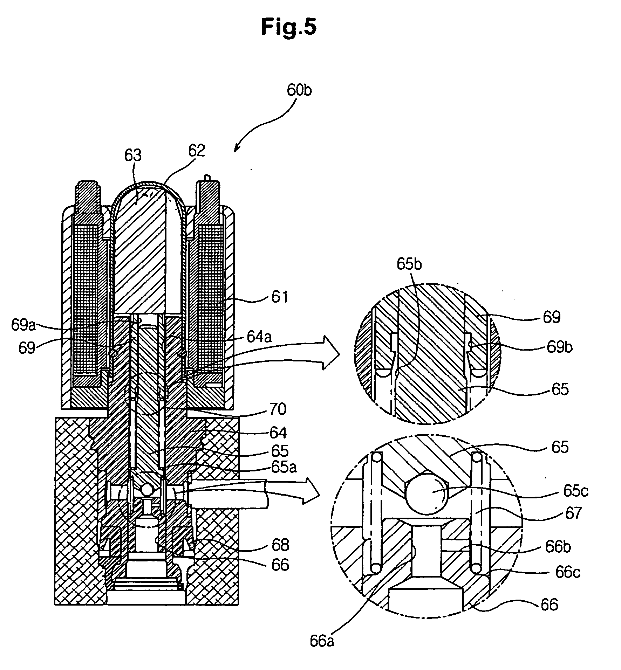

FIG. 5 illustrates another rolling-prevention solenoid valve 60b for use in the anti-lock brake system according to the second embodiment of the present invention. Similarly, the same reference numerals as those of FIG. 3 designate the same constituent elements. Hereinafter, only different configurations from those of the rolling-prevention solenoid valve 60a shown in FIG. 3 will be explained.

The rolling-prevention solenoid valve 60b of the present embodiment further includes a plunger guide member 69 provided below the armature 63. The plunger guide member 69, which serves as a coupling structure of the plunger 65, has a cylindrical hollow portion 69a, and a holding groove 69b formed in an inner peripheral surface thereof to have a predetermined width.

In the present embodiment, the plunger 65 is inserted into the hollow portion 69a of the plunger guide member 69. The plunger 65 is formed at a lower end thereof with a seating protrusion 65a such that a relief spring 70 is inserted between an upper surface of the seating protrusion 65a of the plunger 65 and a lower surface of the plunger guide member 69. A downwardly-expanded diameter increasing portion 65b is provided at a middle portion of the plunger 65 to be caught by the holding groove 69b of the plunger guide member 69 as the plunger 65 slides upward. Thereby, the diameter increasing portion 65b serves to limit a sliding distance of the plunger 65.

The relief spring 70 has an elastic coefficient larger than that of the return spring 67. Preferably, the elastic coefficient of the relief spring 70 is determined to keep the wheel cylinder 22 at a predetermined hydraulic pressure suitable to prevent rolling of a vehicle upon completion of a braking operation.

Now, the operation of the anti-lock brake system according to the present invention will be explained in detail with reference to FIGS. 2 and 4.

If a driver presses the brake pedal 34, a booster 35 generates an increased force based on an atmospheric pressure difference, and the master cylinder 21 generates a hydraulic brake pressure upon receiving the increased force. The hydraulic brake pressure is supplied to the wheel cylinder 22 on each wheel through the rolling-prevention solenoid valve 60a or 60b and the NO solenoid valve 23, to cause a wheel braking operation. In this case, when excessive brake fluid is transmitted to the wheel cylinder 22, each vehicle wheel stops rotation, and exhibits a slippage phenomenon on a road surface. If the wheel sensor 71 mounted on the vehicle wheel senses the slippage phenomenon and transmits a signal to the ECT (not shown), the ECU performs a control operation to open the NC solenoid valve 25 while closing the NO solenoid valve 23 based on the signal from the wheel sensor 71. With this control operation, brake fluid in the wheel cylinder 22 is discharged to the low-pressure accumulator 28 via the return path 24, and the temporary braking state of the vehicle wheel is canceled, namely a slippage of the wheel is prevented.

The brake fluid discharged through NC type solenoid valve 25 is introduced into the low-pressure accumulator 28 to be temporarily stored therein. Then, the brake fluid in the low-pressure accumulator 28 is pressurised in accordance with operation of the hydraulic pump 27, and is discharged to the high-pressure accumulator 29. After passing through the high-pressure accumulator 29, the brake fluid is supplied to the supply path 30 upstream of the NO solenoid valve 23 to generate a hydraulic brake pressure, thereby causing a repeated wheel braking operation. In this case, the NO solenoid valve 23 is opened and the NC type solenoid valve 25 is closed based on a control operation of the ECU such that the brake fluid, which was pressurised by the hydraulic pump 27, is supplied to the wheel cylinder 22. That is, the anti-lock brake system intermittently supplies brake fluid to the wheel cylinder 22 while repeatedly performing such a braking operation, thereby achieving a stable vehicle braking operation.

Meanwhile, when a driver presses the brake pedal 34 while on a slope, a vehicle obtains a stable braking force via the above described operation, thereby to be stopped.

Specifically, if the wheel sensor 71 senses a stationary state of a vehicle while on a slope, an electric signal is applied to the TCU 72 to initiate the rolling-prevention mode. In the rolling-prevention mode, as the TCU 72 switches on the rolling-prevention solenoid valve 60a or 60b to close the main orifice 66a, return of the brake fluid from the wheel cylinder 22 is interrupted, thus maintaining a braking force applied to the wheel. That is, if the brake pedal 34 is pressed to stop a vehicle on a slope, the rolling-prevention solenoid valve 60a or 60b is switched on to close a hydraulic pressure line so as to prevent the brake fluid from being returned from the wheel cylinder 22 to the master cylinder 21, thereby maintaining a braking operation by the brake. Then, if the brake pedal 34 is further pressed, the brake fluid in the master cylinder 21 is introduced into the wheel cylinder 22 through the lip gap 68 defined in the rolling-prevention solenoid valve 60a or 60b and through the NO solenoid valve 23. This enables an increase in hydraulic brake pressure in the wheel cylinder 22, achieving an increased braking force.

On the other hand, if the pressure applied to the brake pedal 34 is removed to start the vehicle, the brake fluid in the wheel cylinder 22 is returned into the rolling-prevention solenoid valve 60a or 60b through the check valve 26 that is installed to bypass the NO solenoid valve 23. In this case, since the rolling-prevention solenoid valve 60a and 60b is not switched off by the TCU 72, a predetermined amount of the brake fluid in the wheel cylinder 22 is returned to the master cylinder 21 through the relief valve 33a or 33b. Thereby, the remaining brake fluid in the wheel cylinder 22 generates a braking force using a hydraulic brake pressure that is reduced to a predetermined hydraulic pressure suitable to prevent an unintentional rolling of the vehicle. After the hydraulic brake pressure in the wheel cylinder 22 is reduced to the predetermined hydraulic pressure value, the brake fluid in the wheel cylinder 22 is gradually discharged through the auxiliary orifice 66b.

Thereafter, if the wheel sensor 71 senses power transmitted by a clutch (not shown) and applies a signal to the TCU 72, the rolling-prevention mode is cancelled and the rolling-prevention solenoid valve 60a or 60b is switched off by the TCU 72. In this case, the main orifice 66a is opened to return the brake fluid in the wheel cylinder 22 to the master cylinder 21. That is, only when a driver presses an accelerator pedal after releasing the brake pedal 34 in order to start a vehicle, operation of the clutch is canceled to transmit engine power to a transmission (not shown). Thereby, since the TCU 72 opens the rolling-prevention solenoid valve 60a or 60b to cancel the hydraulic brake pressure in the wheel cylinder 22, there is no risk of unintentional rolling of a vehicle during a delay time required to press the accelerator pedal after releasing the brake pedal 34.

Now, the operation of a rolling-prevention device 36 for use in the anti-lock brake system according to the first embodiment of the present invention will be explained in detail with reference to FIGS. 2 and 3.

If a stationary state of a vehicle is detected while on a slope, an electric signal is applied to the TCU 72 such that the TCU 72 applies electricity to the coil 61 of the rolling-prevention solenoid valve 60a. If a magnetic field is produced by the magnet core 64 by the applied electricity, the armature 63 in the sleeve 62 moves downwards to move the plunger 65 connected thereto downward. As a result, the main orifice 66a of the valve seat 66 is closed by an opening/closing member 65c provided at a lower end of the plunger 65.

In accordance with the above described operation of the rolling-prevention solenoid valve 60a, no hydraulic brake pressure is returned from the wheel cylinder 22 to the master cylinder 21, thus maintaining a braking operation by the brake. Then, if the brake pedal 34 is further pressed, the brake fluid in the master cylinder 21 is introduced into the wheel cylinder 22 by passing through the lip gap 68 defined in the rolling-prevention solenoid valve 60a and through the NO solenoid valve 23, resulting in an increase in the hydraulic brake pressure in the wheel cylinder 22.

Meanwhile, when the brake pedal 34 is released to start a vehicle, the rolling-prevention solenoid valve 60a is continuously maintained in an operated state to close the brake fluid path. Therefore, only a part of the brake fluid in the wheel cylinder 22 returns to the master cylinder 21 through the small-diameter auxiliary orifice 66b defined in the rolling-prevention solenoid valve 60a, rather than being returned to the master cylinder 21 through the check valve 26 that is installed to bypass the NO solenoid valve 23. In this case, since the most brake fluid is maintained in the wheel cylinder 22, the hydraulic brake pressure of the relief path 32 increases at an entrance of the relieve valve 33a. Due to such an increase in hydraulic brake pressure, the relief valve 33a is opened to allow the brake fluid to be returned from the wheel cylinder 22 to the master cylinder 21 through the relief path 32. Thereby, the brake fluid in the wheel cylinder 22 is discharged to the master cylinder 21 through the relief valve 33a and the auxiliary orifice 66b that is always open. In this case, the relief valve 33a is installed to keep the wheel cylinder 22 at a predetermined hydraulic brake pressure suitable to prevent an unintentional rolling of a vehicle. Accordingly, if the hydraulic brake pressure in the wheel cylinder 22 is reduced to the predetermined hydraulic brake pressure, the relief valve 33a closes the relief path 32, to prevent unintentional rolling of a vehicle. Even during this relief operation, of course, the brake fluid in the wheel cylinder 22 is gradually discharged through the check valve 26 and auxiliary orifice 66b.

Thereafter, if the accelerator pedal (not shown) is pressed to transmit engine power to a transmission (not shown), the wheel sensor 71 senses the power and applies a signal to the TCU 72. Thereby, as the TCU 72 switches off the rolling-prevention solenoid valve 60a to open the main orifice 66a, the brake fluid acting on the wheel cylinder 22 is returned to the master cylinder 21.

Next, the operation of the rolling-prevention solenoid valve 60b for use in the anti-lock brake system according to the second embodiment of the present invention will be explained in detail with reference to FIGS. 4 and 5.

As shown in FIG. 5, the rolling-prevention solenoid valve 60b according to the second embodiment of the present invention further includes the plunger guide member 69 and the relief spring 70, to achieve a relief function.

If the rolling-prevention solenoid valve 60b of the anti-lock brake system according to the second embodiment of the present invention is operated, the armature 63 moves downwards, and accordingly, the plunger guide member 69 inserted in the hollow portion 64a of the magnet core 64 while being connected to the armature 63 moves downwards. During downwards movement of the plunger guide member 69, the plunger 65 connected to the plunger guide member 69 via the relief spring 70 is simultaneously operated to move downwards. Thereby, the main orifice 66a of the valve sheet 66 is closed by the opening/closing member 65c provided at the lower end of the plunger 65. In this case, since the elastic coefficient of the relief spring 70 is larger than that of the return spring 67 provided between the plunger 65 and the valve seat 66, the relief spring 70 is not compressed in spite of the compression of the return spring 67; and therefore, there is no change in a relative position between the plunger 65 and the plunger guide member 69.

Meanwhile, when the brake pedal 34 is released to start a vehicle, the hydraulic pressure of brake fluid, which is being returned from the wheel cylinder 22 to the master cylinder 21, increases. As the relief spring 70 is compressed with such an increased hydraulic pressure, the plunger 65 slides upwards relative to the plunger guide member 69 to allow the opening/closing member 65c at the lower end of the plunger 65 to be pushed up, resulting in opening of the main orifice 66a. Thereby, the brake fluid in the wheel cylinder 22 is discharged to the master cylinder 21 through the main orifice 66a and the auxiliary orifice 66b that is always open. In this case, since the diameter increasing portion 65b of the plunger 65 is caught by the holding groove 69b of the plunger guide member 69 during the upwards sliding of the plunger 65, there is no risk of excessive upward sliding of the plunger 65.

The relief spring 70 has an elastic coefficient capable of maintaining the hydraulic brake pressure in the wheel cylinder 22 at a predetermined hydraulic pressure for preventing unintentional rolling of a vehicle. If the hydraulic brake pressure in the wheel cylinder 22 is reduced to the predetermined hydraulic pressure, the relief spring 70 is released from the compressed state thereof because the elasticity thereof becomes larger than the hydraulic brake pressure in the wheel cylinder 22. As a result, the plunger 65 slides downwards, causing the main orifice 66a of the valve sheet 66 to be closed by the opening/closing member 65c.

With the above described operation of the anti-lock brake system, there is no risk of an unintentional rolling of a vehicle. Furthermore, through the use of the relief valve 33a or 33b, the hydraulic brake pressure in the wheel cylinder 22 is able to be reduced to a predetermined hydraulic pressure during a delay time until an accelerator pedal is pressed after releasing the brake pedal 34. Such a relief operation allows rapid and smooth starting of a vehicle when a driver presses the accelerator pedal. The anti-lock brake system of the present invention further includes a rolling-prevention solenoid valve and relief valve integrally organised in a single modulator block, resulting in an improvement in assembling efficiency and enabling compact space utilisation.

With an anti-lock brake system according to the present invention which includes a rolling-prevention solenoid valve formed with a main and an auxiliary orifice and comprising a relief valve installed in the hydraulic circuit, it is possible to prevent a vehicle, which temporarily stops on a slope, from rolling rearwards upon restarting of the vehicle, and enabling rapid and smooth starting of the vehicle.

Further, according to a preferred embodiment of the present invention, the rolling-prevention solenoid valve may be integrally formed with a relief structure to achieve an additional relief function. This has the effect of simplifying the overall brake fluid path of an anti-lock brake system and eliminating a need for preparing a separate relief valve, resulting in a reduction in manufacturing costs and increasing utility of installation space.

Furthermore, according to a preferred embodiment of the present invention, the anti-lock brake system is integrally organised with the rolling-prevention solenoid valve achieving a relief function in a single modulator block, resulting in an improvement in assembling efficiency in addition to reduced manufacturing costs and increased installation space utility.

Although embodiments of the present invention have been shown and described, it would be appreciated by those skilled in the art that changes may be made in this embodiment without departing from the principles of the invention, the scope of which is defined in the claims.

## Claims

1. An anti-lock brake system comprising a master cylinder (21) for generating a hydraulic brake pressure, a wheel cylinder (22) provided at a vehicle wheel and adapted to generate a braking force based on the hydraulic brake pressure, a normally-open (NO) solenoid valve (23) and a normally-closed (NC) solenoid valve (25) provided, respectively, at locations near the entrance and the exit of the wheel cylinder and adapted to control flow of brake fluid, a hydraulic pump (27) installed on a return path (24) and adapted to suction and pressure the brake fluid returned from the wheel cylinder, and a low-pressure accumulator (28) provided upstream of the hydraulic pump and adapted to accumulate the brake fluid, the system further comprising:
a wheel sensor (7) for sensing a stationary state of the vehicle on a slope;
an NO rolling-prevention solenoid valve (60a) installed in a connection path that connects an exit of the master cylinder to an exit of the hydraulic pump, the NO rolling prevention solenoid valve having a valve seat (66) provided with a main orifice (66a) to be closed during a rolling-prevention mode;
a relief path (32) that connects the exit of the master cylinder to a location upstream of the NO solenoid valve; and
a relief valve (33a) installed in the relief path and adapted to reduce the hydraulic brake pressure in the wheel cylinder when the hydraulic brake pressure exceeds a predetermined pressure value in a closed state of the rolling-prevention solenoid valve;
**characterised in that** the NO rolling-prevention solenoid valve further has a permanently-open auxiliary orifice (66b) having a smaller diameter than that of the main orifice extending laterally from the main orifice through the valve seat.

2. A system according to claim 1, wherein the NO rolling-prevention solenoid valve (60b) includes an armature (63) a magnet core (64), a plunger (65) and a return spring (67), and
wherein the rolling-prevention solenoid valve (60b) further comprises: a plunger guide member (69) installed between an outer peripheral surface of the plunger and an inner peripheral surface of the magnet core; and a relief spring (70) configured to surround the outer peripheral surface of the plunger and inserted between the plunger and the plunger guide member,
whereby the rolling-prevention solenoid valve has an additional relief function to reduce the hydraulic brake pressure in the wheel cylinder (22) when the hydraulic brake pressure exceeds a predetermined pressure when the main orifice (60a) of the rolling-prevention solenoid valve is closed.

3. A system according to claim 2, wherein the relief spring (70) has an elastic coefficient larger than that of the return spring (67).

4. A system according to any one of claims 1 to 3, wherein the rolling-prevention solenoid valve (60a) further has a lip gap (68) to circulate the brake fluid from the master cylinder (21) to a supply path during implementation of the rolling-prevention mode while preventing backflow of the brake fluid.

5. A system according to any one of claims 1 to 4, wherein the anti-lock brake system is mounted in a single modulator block.

## Patentansprüche

1. Antiblockiersystem mit
einem Hauptzylinder (21) zum Erzeugen eines Hydraulikbremsdrucks;
einem an einem Fahrzeugrad angeordneten Radzylinder (22), der dazu geeignet ist, basierend auf dem Hydraulikbremsdruck eine Bremskraft zu erzeugen;
einem normalerweise offenen (NO) Solenoidventil (23) und einem normalerweise geschlossenen (NC) Solenoidventil (25), die an Positionen in der Nähe des Einlasses bzw. des Auslasses des Radzylinders angeordnet und dazu geeignet sind, den Durchfluss eines Bremsfluids zu steuern;
einer in einem Rücklaufpfad (24) installierten Hydraulikpumpe (27), die dazu geeignet ist, das vom Radzylinder zurückströmende Bremsfluid anzusaugen und unter Druck zu setzen; und
einem stromaufwärts von der Hydraulikpumpe angeordneten Niederdruck-Druckspeicher (28), der dazu geeignet ist, das Bremsfluid zu speichern;
wobei das System ferner aufweist:
einen Radsensor (7) zum Erfassen eines Stillstandzustands des Fahrzeugs auf einer Neiung;
ein normalerweise offenes (NO) Rollbewegungsunterdrückungs-Solenoidventil (60a), das in einem Verbindungspfad installiert ist, der einen Auslass des Hauptzylinders mit einem Auslass der Hydraulikpumpe verbindet, wobei das normalerweise offene Rollbewegungsunterdrückungs-Solenoidventil einen Ventilsitz (66) mit einer während eines Rollbewegungsunterdrückungsmodus zu schließenden Hauptöffnung (66a) aufweist;
einen Druckentlastungspfad (32), der den Auslass des Hauptzylinders mit einer Position stromaufwärts vom normalerweise offenen Solenoidventil verbindet; und
ein im Druckentlastungspfad installiertes Entlastungsventil (33a), das dazu geeignet ist, den Hydraulikbremsdruck im Radzylinder zu vermindern, wenn der Hydraulikbremsdruck in einem geschlossenen Zustand des Rollbewegungsunterdrückungs-Solenoidventils einen vorgegebenen Druckwert überschreitet;
**dadurch gekennzeichnet, dass**
das normalerweise offene Rollbewegungsunterdrückungs-Solenoidventil ferner eine permanent offene Zusatzöffnung (66b) aufweist, deren Durchmesser kleiner ist als derjenige der Hauptöffnung, wobei die Zusatzöffnung sich von der Hauptöffnung seitlich durch den Ventilsitz erstreckt.

2. System nach Anspruch 1, wobei das normalerweise offene Rollbewegungsunterdrückungs-Solenoidventil (60b) einen Anker (63), einen Magnetkern (64), einen Plunger (65) und eine Rückstellfeder (67) aufweist, und
wobei das Rollbewegungsunterdrückungs-Solenoidventil (60b) ferner aufweist:
ein zwischen einer Außenumfangsfläche des Plungers und einer Innenumfangsfläche des Magnetkerns angeordnetes Plungerführungselement (69); und
eine zwischen dem Plunger und dem Plungerführungselement eingesetzte Entlastungsfeder (70), die derartkonfiguriert ist, dass sie die Außenumfangsfläche des Plungers umschließt;
wobei das Rollbewegungsunterdrückungs-Solenoidventil eine zusätzliche Druckentlastungsfunktion aufweist, gemäß der der Hydraulikbremsdruck im Radzylinder (22) vermindert wird, wenn der Hydraulikbremsdruck einen vorgegebenen Druck überschreitet und die Hauptöffnung (60a) des Rollbewegungsunterdrückungs-Solenoidventils geschlossen ist.

3. System nach Anspruch 2, wobei die Entlastungsfeder (70) eine Federkonstante aufweist, die größer ist als diejenige der Rückstellfeder (67).

4. System nach einem der Ansprüche 1 bis 3, wobei das Rollbewegungsunterdrückungs-Solenoidventil (60a) ferner einen Lippenspalt (68) zum Zuführen des Bremsfluids während des Rollbewegungsunterdrückungsmodus vom Hauptzylinder (21) zu einem Zufuhrpfad aufweist, während ein Rückfluss des Bremsfluids verhindert wird.

5. System nach einem der Ansprüche 1 bis 4, wobei das Antiblockiersystem in einem einzelnen Modulatorblock angeordnet ist.

## Revendications

1. Système de freinage antiblocage comprenant un maître-cylindre (21) pour générer une pression de freinage hydraulique, un cylindre de roue (22) disposé sur une roue de véhicule et adapté pour générer une force de freinage basée sur la pression de frein hydraulique, une électrovanne (23) normalement ouverte (NO) et une électrovanne (25) normalement fermée (NF) disposées respectivement à des emplacements près de l'entrée et de la sortie du cylindre de roue et adaptées pour contrôler le débit du fluide de freinage, une pompe hydraulique (27) installée sur un chemin de retour (24) et adaptée pour aspirer et mettre sous pression le fluide de freinage revenant du cylindre de roue, et un accumulateur basse pression (28) disposé en amont de la pompe hydraulique et adapté pour accumuler le fluide de freinage, ce système comprenant en outre :
un capteur de roue (7) pour détecter un état stationnaire du véhicule sur une pente ;
une électrovanne (60a) de prévention de roulement NO installée dans un chemin de connexion reliant une sortie du maître cylindre à une sortie de la pompe hydraulique, l'électrovanne de prévention de roulement NO ayant un siège de valve (66) doté d'un orifice principal (65a) qui est fermé dans un mode de prévention de roulement ;
un chemin de décharge (32) connectant la sortie du maître-cylindre à un emplacement en amont de l'électrovanne NO ; et
un clapet de décharge (33a) installé dans le chemin de décharge et adapté pour réduire la pression de freinage hydraulique dans le cylindre de roue lorsque la pression de freinage hydraulique dépasse une valeur de pression prédéterminée dans un état fermé de l'électrovanne de prévention de roulement ; **caractérisé en ce que** l'électrovanne de prévention de roulement NO dispose en outre d'un orifice auxiliaire ouvert en permanence (66b), ayant un plus petit diamètre que celui de l'orifice principal, s'étendant latéralement depuis l'orifice principal au travers du siège de valve.

2. Système selon la revendication 1, dans lequel l'électrovanne (60b) de prévention de roulement NO inclut une armature (63), un noyau aimanté (64), un plongeur (65) et un ressort de rappel (67), et
dans lequel l'électrovanne de prévention de roulement (60b) comprend en outre : une membrure (69) de guidage de plongeur installée entre une surface périphérique extérieure du plongeur et une surface périphérique interne du noyau aimanté ; et un ressort de rappel (70) configuré pour entourer la surface périphérique extérieure du plongeur et insérée entre le plongeur et la membrure de guidage du plongeur,
dans lequel l'électrovanne de prévention de roulement a une fonction de décharge supplémentaire pour réduire la pression de freinage hydraulique dans le cylindre de roue (22) lorsque la pression de freinage hydraulique dépasse une pression prédéterminée lorsque l'orifice principal (60a) de l'électrovanne de prévention de roulement est fermé.

3. Système selon la revendication 2, dans lequel le ressort de rappel (70) a un coefficient élastique plus important que celui du ressort de rappel (67).

4. Système selon l'une ou l'autre des revendications 1 à 3, dans lequel l'électrovanne (60a) de prévention de roulement a en outre un intervalle de lèvre (68) pour faire circuler le fluide de freinage depuis le maître-cylindre (21) vers un chemin d'alimentation pendant la mise en oeuvre du mode de prévention de roulement tout en empêchant le retour du fluide de freinage.

5. Système selon l'une ou l'autre des revendications 1 à 4, dans lequel le système de freinage anti-blocage est monté dans un bloc modulateur unique.
